# EUROPEAN PATENT APPLICATION

(11) **EP 3 441 410 A1**
(43) Date of publication of application: **13.02.2019**
(21) Application number: 17185174.4
(22) Date of filing: 07.08.2017
(51) Int. Cl.: C08G 18/79, C09D 175/02, C08G 18/32

(54) **POLYURETHANE SYSTEM AND ITS USE IN PRINTING TECHNOLOGY**

(71) Applicant: RAMPF Holding GmbH & Co. KG, 72661 Grafenberg (DE)
(72) Inventor: PROGNER, Daniela, 73230 Kirchheim unter Teck (DE); RETIG, Stefan, 72585 Riederich (DE); GEIGER, Gunnar, 72144 Dußlingen (DE)
(74) Representative: Weickmann & Weickmann PartmbB

(57) **Abstract**

The present invention is directed to a polyurethane system for the preparation of a polyurethane resin, comprising at least one aliphatic polyisocyanate and at least one aromatic diamine, as well as to its use, particularly in printing technology.

## Description

The present invention is directed to a polyurethane system for the preparation of a polyurethane resin, comprising at least one aliphatic polyisocyanate and at least one aromatic diamine, as well as to its use, particularly in printing technology.

Intaglio is the family of printing and printmaking techniques, wherein the image is incised into a surface and the incised line or sunken area holds the ink. The surface is usually made from metals, such as copper or zinc. The incisions are created by etching, engraving, dry point, aquatint or mezzotint.

Rotogravure is a type of intaglio printing process, which involves engraving the image onto a gravure cylinder as image carrier. The cylinder usually has an iron or steel core, which is covered by a layer of copper that is about 2 mm thick. An additional layer of copper capable of being engraved is applied to this so-called inner copper layer via a galvanization process. The outer layer of copper has a thickness of about 100 microns. There is a plurality of options for engraving the cylinders. Nowadays, the gravure cylinders are mostly engraved directly, e.g. via a laser beam or modern etching processes.

A considerable disadvantage of this procedure is, on the one hand, the complicated production of the gravure cylinders, which necessarily requires a galvanization step. This wet chemical process represents a considerable health risk for the people involved in the process, but also results in solutions containing heavy metal that have to be disposed of as special waste. On the other hand, the so prepared cylinders tend to deform under mechanical stress. In the latter case, the printing quality is reduced and in more severe cases, the gravure cylinder has to be renewed.

In the past years, it was suggested to coat gravure cylinders having an inner metal core with a polymeric resin. The coating process is relatively simple. In a so-called ribbon flow process, the resin mixture is homogeneously applied to the rotating cylinder in a thin jet and then cured. The polymeric resin may easily be engraved by known methods. After use, the imprinted layer may be milled off and the thus generated smooth surface may be reused for imprinting. Exemplary polymeric resins that may be used as a substrate in such printing processes may be polyurethanes usually made from isocyanate-containing prepolymers and chain extenders.

However, the polymer resins of the prior art do not exhibit the required characteristics materials should exhibit when used in such printing processes, particularly in view of mechanical stability, abrasion resistance, and elasticity, but also chemical inertness (versus ink compositions). Only polymeric resins that fulfill the above requirements provide for reproducible high-quality printing results over a long operating life.

Surprisingly, a polyurethane system was found that shows an ideal balance of the characteristics described above.

Thus, in one aspect, the present invention relates to a polyurethane system for the preparation of a polyurethane resin, comprising
(i) at least one aliphatic polyisocyanate (IC) and
(ii) at least one aromatic diamine (DA), particularly phenylene diamine, optionally one or more times substituted by at least one of C₁₋₆-alkyl and C₁₋₆-alkylthio, and/or methylenebis(aniline), optionally one or more times substituted by at least one of C₁₋₆-alkyl and halogen.

The aliphatic polyisocyanate (IC) preferably comprises an isocyanurate group, a biuret group, a urethane group, an allophanate group, an iminooxadiazine group, a carbodiimide group, a uretdione group or mixtures thereof. In a more preferred embodiment, the aliphatic polyisocyanate (IC) comprises an isocyanurate and/or a biuret group. Even more preferably, the aliphatic polyisocyanate (IC) comprises an isocyanurate group.

The aliphatic polyisocyanate (IC) preferably has an NCO content of at least 11%, more preferably 17-27%, even more preferably 18-25%. It turned out that such high NCO contents result in polyurethanes that are ideally suitable for printing applications, particularly in view of swelling and abrasion resistance. For this reason, it is preferred that the polyurethane system is free of any isocyanate-containing prepolymer, since said prepolymers cannot reach such high NCO contents. In another preferred embodiment, the polyurethane system of the invention is particularly free of any prepolymer.

In a preferred embodiment, the aliphatic polyisocyanate (IC) is based on hexamethylene diisocyanate (HDI) or isophorone diisocyanate (IPDI). Particularly, the aliphatic polyisocyanate (IC) according to component (i) is based on HDI.

In a very preferred embodiment, the aliphatic polyisocyanate (IC) according to component (i) is an HDI trimerisate having the following formula:

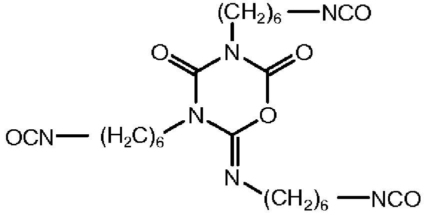

According to the invention, the polyurethane system comprises at least one aromatic diamine (DA). The aromatic diamine (DA) may be phenylene diamine, optionally one or more times substituted by at least one of C₁₋₆-alkyl and C₁₋₆-alkylthio.

*"Alkyl"* as used herein refers to a saturated hydrocarbon residue having the indicated number of carbon atoms. The alkyl group may be linear or branched.

"*Alkylthio"* as used herein refers to a group of the formula -S-alkyl, wherein the meaning of alkyl is as described above.

In a preferred embodiment, the phenylene diamine is a toluene diamine, which is two or three times substituted by at least one of C₁₋₆-alkyl and C₁₋₆-alkylthio. Particularly, the phenylene diamine is di(C₁₋₆-alkylthio)toluene diamine, such as dimethylthiotoluene diamine or di(C₁₋₆-alkyl)toluene diamine, such as diethyltoluene diamine, preferably 3,5-diethyltoluene-2,4-diamine or 3,5-diethyltoluene-2,6-diamine.

In another aspect, the aromatic diamine (DA) may be methylenebis(aniline), which is optionally one or more times substituted by at least one of C₁₋₆-alkyl and halogen.

As used herein, the term *"halogen"* refers to a fluoro, chloro, bromo or iodo group, particularly a chloro group.

In preferred embodiments, the methylenebis(aniline) is 4,4'-methylenebis(aniline), methylenebis(2,6-diisopropylaniline), methylenebis(2-methyl-6-isopropylaniline), methylenebis(2-isopropyl-6-methylaniline), such as 4,4'-methylenebis(2-isopropyl-6-methylaniline), methylenebis(3-isopropyl-2,6-diethylaniline), such as 4,4'-methylenebis(3-isopropyl-2,6-diethylaniline), methylenebis(6-methylaniline), particularly 4,4'-methylenebis(6-methylaniline), and/or methylenebis(3-chloro-2,6-diethylaniline).

Component (ii) may be a mixture comprising phenylene diamine, which is optionally one or more times substituted by at least one of C₁₋₆-alkyl and C₁₋₆-alkylthio, and methylenebis(aniline), optionally one or more times substituted by at least one of C₁₋₆-alkyl and halogen. The preferred compounds of phenylene diamine and methylenebis(anliline) in the mixture are the same as defined above.

In another embodiment, component (ii) may be a mixture comprising toluene diamine substituted by one or two C₁₋₆-alkylthio groups, such as dimethylthiotoluene diamine, and toluene diamine substituted by one or two C₁₋₆-alkyl groups, such as diethyltoluene diamine.

In a preferred aspect, the present invention relates to a polyurethane system for the preparation of a polyurethane resin, comprising
(i) at least one aliphatic polyisocyanate (IC) and
(ii) a mixture comprising toluene diamine substituted by one or two C₁₋₆-alkylthio groups, such as dimethylthiotoluene diamine, and toluene diamine substituted by one or two C₁₋₆-alkyl groups, such as diethyltoluene diamine.

In the above mixtures, the weight ratio of the toluene diamine substituted by one or two C₁₋₆-alkylthio groups and the toluene diamine substituted by one or two C₁₋₆-alkyl groups preferably is 5:95 to 95:5, more preferably 70:30 to 30:70, even more preferably 50:50.

In a preferred embodiment, component (ii) comprises at least 90 wt.-%, more preferably at least 95 wt.-% dimethylthiotoluene diamine and/or diethyltoluene diamine.

The polyurethane system according to the invention may further comprise at least one excipient. The term *"excipient"* as used herein refers to additional components, which provide for certain characteristics of the polyurethane resin, for example the excipient may provide for improved electrical conductivity, thixotropy, mechanical parameters, such as stiffness, and catalyzing the conversion between components (i) and (ii). In a preferred embodiment, such excipient may be an agent that provides for electrical conductivity. Such agents are known to the skilled person and include, for example, carbon-containing agents, such as carbon black, modified carbon black, carbon nanotubes, and/or quaternary ammonium compounds. Excipients that provide for improved thixotropy of components (i), (ii) and/or mixtures thereof may be aliphatic amines and/or polyamines, such as polyethyleneimine.

Other excipients may be organic or inorganic fillers, such as silica, minerals or microspheres.

The polyurethane system is preferably configured such that the molar ratio of the NCO groups in component (i) to NCO reactive hydrogen in component (ii) is 0.9 to 1.1, preferably 0.95 to 1.08, more preferably 1.00 to 1.06.

NCO reactive hydrogen particularly relates to any -NH₂ and -OH group, but not to -NH-, -COOH or other H-containing groups.

In another aspect, the present invention provides for a process for preparing a polyurethane resin, comprising the steps of
a) providing and degassing component (i),
b) providing and degassing component (ii),
c) mixing component (i) of step a) and component (ii) of step b), optionally under reduced pressure and/or increased temperature,
d) applying the mixture obtained in step c) onto a substrate or in a mould and
e) curing, optionally at increased temperatures, such as 80-150°C, preferably 100-120°C.

A further aspect of the invention thus is a polyurethane resin obtainable by conversion of the polyurethane system or obtainable by the process as described above.

Surprisingly, it was found that the polyurethane resins according to the invention preferably have a swelling behavior of at most 20%, preferably at most 5%, more preferably at most 2%, or 0.001-20%, after 24 hours of storage in ethyl acetate at 22 °C. The skilled person will be aware that inks for rotogravure printing usually contain solvents, particularly organic solvents such as ethyl acetate and acetone. One of the most significant drawbacks of polymer resins of the prior art is their swelling behavior in the presence of organic solvents. Thus, when using the polyurethane resins according to the invention in printing processes, it has to be assured that the dimension stability of the material is given under the respective printing conditions, i.e. under mechanical stress as well as under the chemical conditions predefined by the respective inks used.

For this reason, the polyurethane resins according to the present invention can preferably be used as a substrate in printing technology, particularly as a substrate that can be used in direct contact with the printing ink. In a more preferred embodiment, the polyurethane resins of the invention can act as a coating, e.g. on gravure cylinders, in rotogravure printing technology.

The polyurethane resin according to the invention may have a shore D hardness of 50-90, preferably 60-90, measured according to DIN EN ISO 868. The shore hardness is balanced such that the polyurethane resin provides sufficient hardness to withstand the mechanical load in the printing industry, e.g. as a cylinder coating in a rotogravure process, but also provides sufficient elasticity, which prevents a permanent deformation and results in long-lasting high printing quality.

The polyurethane resin according to the invention can further be characterized by a minimum abrasion, particularly by an abrasion of 10-400 mm³, preferably 20-300 mm³, measured according to DIN ISO 4946. The abrasion characteristics of the polyurethane resin of the invention assure that the printed pattern can be used with sufficient quality for a long-running term.

The density of the polyurethane resin according to the invention particularly is in the range of 1.05-1.25 g/cm³.

The polyurethane resin according the invention may have an elongation of 2-30 %, preferably 4-20 %, measured according to DIN ISO 527.

The polyurethane resin according to the invention preferably has a surface resistance of 0.05-1.0 MΩ, more preferably 0.1-0.3 MΩ, measured according to IEC 62631-3-2. Such characteristics assure a sufficient discharge capability, particularly required when the polyurethane resin is used as a substrate in printing processes.

In the following, the invention is more specifically shown by examples.

### Examples

### Materials

ETHACURE^{®} 100 is 3,5-diethyltoluene-diamine having an equivalent weight of 89.1. It can be purchased from Albemarle Corporation.

ETHACURE^{®} 300 is dimethylthiotoluene diamine having an equivalent weight of 107. It can be purchased from Albemarle Corporation.

Desmodur^{®} N 3200 is an HDI trimerisate having an NCO content of 23.0 ± 0.5% (measured by M105-ISO 11909). Its viscosity at 23 °C is 2500 ± 1000 mPa·s (measured according to M014-ISO 3219/A.3).

IMUTHANE^{®} PET-70D is an NCO prepolymer made from toluene diisocyanate (TDI) and polytetramethyleneglycol having an NCO content of 8.7%. Its viscosity is about 2,000-2,200 cps at 40 °C. It can be purchased from Coim USA Inc.

### Preparation of the polyurethane resin

The mixture of component (i) as indicated in Table 1 was homogenized and degassed. Component (ii) was degassed and added to component (i) using the amounts indicated in Table 1. The mixture of components (i) and (ii) was homogenized in a speedmixer (Vortex) for 20 seconds at a power of 100%. The mixture was poured into an aluminum mold for preparing test samples having a thickness of 2 or 4 mm. After initiation of the reaction, the test samples were tempered for at least 16 hours at 110 °C. After cooling to 25 °C, the test samples were demolded.

**Table 1: Formulation of the polyurethane resin**

| | Comparative example | Example 1 |
|---|---|---|
| **Component (ii)** | | |
| ETHACURE^{®} 100 [parts by weight] | 10 | 10 |
| ETHACURE^{®} 300 [parts by weight] | 90 | 90 |
| **Component (i)** | | |
| Desmodur^{®} N 3200 [parts by weight] | | 176 |
| IMUTHANE^{®} PET-70D [parts by weight] | 465 | |
| **Index** [%] | 100.9 | 101 |

The obtained samples were subsequently post-cured at 110 °C for 24 h and maintained at 22 °C for 12 h. The test results are listed in Table 2, also indicating the respective test methods.

**Table 2: Test results**

| **Characteristic** | **Test method** | **unit** | **Example 1** | **Comparative example** |
|---|---|---|---|---|
| mixing ratio component (ii) : component (i) | - | pbw | 100 : 176 | 100 :465 |
| pot-life | RPV 21 | mm:ss | 05:00 | 07:00 |
| shore hardness | RPV 16 | D | 85 | 70 |
| density | RPV 25 | g/cm³ | 1.19 | 1.16 |
| tensile strength | DIN EN ISO 527 | MPa | 72 | 40 |
| elongation | | % | 6-12 | 250 |
| E-modulus | | MPa | 1900 | 360 |
| flexural strength | DIN EN ISO 178 | MPa | 134 | 24 |
| abrasion | DIN ISO 4946 | mm³ | 220 | 50 |
| swelling | | | | |
| 100% ethylacetate | | | | |
| 0.5 h | | % / Delta Shore D | 0/0 | 2,0/-6 |
| 24 h | | | 0/0 | 19/-33 |
| 25% ethylacetate / 75% isopropylalcohol | | | | |
| 0.5 h | | % / Delta Shore D | 0/0 | 0.9/-4 |
| 24 h | | | 0/0 | 7.5/-18 |

The polyurethane according to the invention shows excellent swelling behavior in the presence of organic solvents such as ethylacetate and/or isopropanol, while having good mechanical characteristics. The polyurethanes are thus ideally suitable for use in printing technology, particularly when in contact with organic solvent containing inks.

The invention is further characterized by the following items:
1. Polyurethane system for the preparation of a polyurethane resin, comprising
   (i) at least one aliphatic polyisocyanate (IC) and
   (ii) at least one aromatic diamine (DA), particularly phenylene diamine, optionally one or more times substituted by at least one of C₁₋₆-alkyl and C₁₋₆-alkylthio, and/or methylenebis(aniline), optionally one or more times substituted by at least one of C₁₋₆-alkyl and halogen, more preferably phenylene diamine, optionally one or more times substituted by at least one of C₁₋₆-alkyl and C₁₋₆-alkylthio.
2. Polyurethane system according to item 1, wherein the polyisocyanate (IC) comprises an isocyanurate group, a biuret group, a urethane group, an allophanate group, an iminooxadiazine group, a carbodiimide group, a uretdione group or mixtures thereof, particularly an isocyanurate and/or a biuret group.
3. Polyurethane system according to item 1 or 2, wherein the polyisocyanate (IC) has an NCO content of at least 11%, preferably 17-27%, more preferably 18-25%.
4. Polyurethane system according to any of the preceding items, wherein the polyisocyanate (IC) is based on hexamethylene diisocyanate (HDI) or isophorone diisocyanate (IPDI), particularly HDI.
5. Polyurethane system according to any of the preceding items, wherein the polyisocyanate (IC) is an HDI-trimerisate.
6. Polyurethane system according to item 1, wherein the polyurethane system is free of any isocyanate prepolymer, particularly free of any prepolymer.
7. Polyurethane system according to any of the preceding items, wherein the phenylene diamine is toluene diamine, two or three times substituted by at least one of C₁₋₆-alkyl and C₁₋₆-alkylthio.
8. Polyurethane system according to any of the preceding items, wherein the phenylene diamine is di(C₁₋₆-alkylthio)toluene diamine or di(C₁₋₆-alkyl)toluene diamine.
9. Polyurethane system according to any of the preceding items, wherein the phenylene diamine is dimethylthiotoluene diamine or diethyltoluene diamine, particularly 3,5-diethyltoluene-2,4-diamine and/or 3,5-diethyltoluene-2,6-diamine.
10. Polyurethane system according to any of the preceding items, wherein the methylenebis(aniline) is 4,4'-methylenebis(aniline), methylenebis(2,6-diisopropylaniline), methylenebis(2-methyl-6-isopropylaniline), methylenebis(2-isopropyl-6-methylaniline), such as 4,4'-methylenebis(2-isopropyl-6-methylaniline), methylenebis(3-isopropyl-2,6-diethylaniline), such as 4,4'-methylenebis(3-isopropyl-2,6-diethylaniline), methylenebis(6-methylaniline), particularly 4,4'-methylenebis(6-methylaniline), and/or methylenebis(3-chloro-2,6-diethylaniline).
11. Polyurethane system according to any of the preceding items, wherein component (ii) is a mixture comprising phenylene diamine, optionally one or more times substituted by at least one of C₁₋₆-alkyl and C₁₋₆-alkylthio, and methylenebis(aniline), optionally one or more times substituted by at least one of C₁₋₆-alkyl and halogen.
12. Polyurethane system according to any of items 1-10, wherein component (ii) is a mixture comprising toluene diamine substituted by one or two C₁₋₆-alkylthio groups and toluene diamine substituted by one or two C₁₋₆-alkyl groups.
13. Polyurethane system according to item 12, wherein component (ii) is a mixture comprising dimethylthiotoluene diamine and diethyltoluene diamine.
14. Polyurethane system according to any of items 12 or 13, wherein the weight ratio of C₁₋₆-alkylthio substituted toluene diamine to C₁₋₆-alkyl substituted toluene diamine is 5:95 to 95:5, preferably 70:30 to 30:70, more preferably 50:50.
15. Polyurethane system according to any of the preceding items, wherein component ii) comprises at least 90 wt.-%, more preferably at least 95 wt.-%, of dimethylthiotoluene diamine and/or diethyltoluene diamine.
16. Polyurethane system according to any of the preceding items further comprising at least one excipient, such as an agent that provides for electrical conductivity, preferably carbon-containing agents such as carbon black, carbon nanotubes and/or quarternary ammonium compounds and a thixotroping agent, preferably an aliphatic amine and/or polyamine, such as polyethyleneimine.
17. Polyurethane system according to item 16, wherein the thixotroping agent is polyetheramine or polyethyleneimine.
18. Polyurethane system according to any of the preceding items, wherein the molar ratio of NCO groups in component (i) to NCO reactive hydrogen, such as -NH₂ and -OH, in component (ii) is 0.9-1.1.
19. Polyurethane resin obtainable by conversion of the polyurethane system according to any of items 1-18.
20. Polyurethane resin according to item 19 having a shore D hardness of 50 to 90, preferably 60 to 90, measured according to DIN EN ISO 868.
21. Polyurethane resin according to any of items 19 or 20 having an abrasion of 10-400 mm³, preferably 20-300 mm³, measured according to DIN ISO 4946.
22. Polyurethane resin according to any of items 19-21 having a density of 1.05-1.25 g/cm³.
23. Polyurethane resin according to any of items 19-22 having an elongation of 2-30 %, preferably 4-20%, measured according to DIN ISO 527.
24. Polyurethane resin according to any of items 19-23 having a surface resistance of 0.05-1.0 MΩ, preferably 0.1-0.3 MΩ, measured according to IEC 62631-3-2.
25. Polyurethane resin according to any of items 19-24 having a swelling behavior of at most 20%, preferably at most 5%, more preferably at most 2%, after 24 hours in ethylacetate at 22°C.
26. Process for preparing a polyurethane resin according to any of items 19-25, comprising the steps
   a) providing and degassing component (i),
   b) providing and degassing component (ii),
   c) mixing component (i) of step a) and component (ii) of step b), optionally under reduced pressure and/or increased temperature,
   d) applying the mixture obtained in step c) onto a substrate or in a mould and
   e) curing, optionally at increased temperatures, such as 80-150 °C, preferably 100-120 °C.
27. Use of a polyurethane system according to items 1-18 or a polyurethane resin according to items 19-25 as a substrate in printing technology, particularly as a substrate that is in contact with printing ink.
28. Use of a polyurethane system according to items 1-18 or a polyurethane resin according to items 19-25 as a coating, particularly on gravure cylinders.

## Claims

1. Polyurethane system for the preparation of a polyurethane resin, comprising
(i) at least one aliphatic polyisocyanate (IC) and
(ii) at least one aromatic diamine (DA), particularly phenylene diamine, optionally one or more times substituted by at least one of C₁₋₆-alkyl and C₁₋₆-alkylthio, and/or methylenebis(aniline), optionally one or more times substituted by at least one of C₁₋₆-alkyl and halogen, more preferably phenylene diamine, optionally one or more times substituted by at least one of C₁₋₆-alkyl and C₁₋₆-alkylthio.

2. Polyurethane system according to claim 1, wherein the polyisocyanate (IC) comprises an isocyanurate group, a biuret group, a urethane group, an allophanate group, an iminooxadiazine group, a carbodiimide group, a uretdione group or mixtures thereof, particularly an isocyanurate and/or a biuret group.

3. Polyurethane system according to claim 1 or 2, wherein the polyisocyanate (IC) has an NCO content of at least 11%, preferably 17-27%, more preferably 18-25%.

4. Polyurethane system according to any of the preceding claims, wherein the polyisocyanate (IC) is based on hexamethylene diisocyanate (HDI) or isophorone diisocyanate (IPDI), particularly HDI, such as HDI-trimerisate.

5. Polyurethane system according to any of the preceding claims, wherein the polyurethane system is free of any isocyanate prepolymer, particularly free of any prepolymer.

6. Polyurethane system according to any of the preceding claims, wherein the phenylene diamine is toluene diamine, two or three times substituted by at least one of C₁₋₆-alkyl and C₁₋₆-alkylthio, such as di(C₁₋₆-alkylthio)toluene diamine or di(C₁₋₆-alkyl)toluene diamine, preferably dimethylthiotoluene diamine or diethyltoluene diamine, such as 3,5-diethyltoluene-2,4-diamine and/or 3,5-diethyltoluene-2,6-diamine.

7. Polyurethane system according to any of the preceding claims, wherein the methylenebis(aniline) is 4,4'-methylenebis(aniline), methylenebis(2,6-diisopropylaniline), methylenebis(2-methyl-6-isopropylaniline), methylenebis(2-isopropyl-6-methylaniline), such as 4,4'-methylenebis(2-isopropyl-6-methylaniline), methylenebis(3-isopropyl-2,6-diethylaniline), such as 4,4'-methylenebis(3-isopropyl-2,6-diethylaniline), methylenebis(6-methylaniline), particularly 4,4'-methylenebis(6-methylaniline), and/or methylenebis(3-chloro-2,6-diethylaniline).

8. Polyurethane system according to any of the preceding claims, wherein component (ii) is a mixture comprising toluene diamine substituted by one or two C₁₋₆-alkylthio groups and toluene diamine substituted by one or two C₁₋₆-alkyl groups, particularly in a weight ratio of 5:95 to 95:5, preferably 70:30 to 30:70, more preferably 50:50.

9. Polyurethane system according to any of the preceding claims, further comprising at least one excipient, such as an agent that provides for electrical conductivity, preferably carbon-containing agents such as carbon black, carbon nanotubes, and/or quarternary ammonium compounds and a thixotroping agent, preferably an aliphatic amine and/or polyamine, such as polyethyleneimine.

10. Polyurethane system according to any of the preceding claims, wherein the molar ratio of NCO groups in component (i) to NCO reactive hydrogen, such as -NH₂ and -OH, in component (ii) is 0.9-1.1.

11. Polyurethane resin obtainable by conversion of the polyurethane system according to any of claims 1-10.

12. Polyurethane resin according to claim 11 having a swelling behavior of at most 20%, preferably at most 5%, more preferably at most 2%, after 24 hours in ethylacetate at 22°C.

13. Process for preparing a polyurethane resin according to claim 11 or 12, comprising the steps
a) providing and degassing component (i),
b) providing and degassing component (ii),
c) mixing component (i) of step a) and component (ii) of step b), optionally under reduced pressure and/or increased temperature,
d) applying the mixture obtained in step c) onto a substrate or in a mould and
e) curing, optionally at increased temperatures, such as 80-150 °C, preferably 100-120 °C.

14. Use of a polyurethane system according to claims 1-10 or a polyurethane resin according to claim 11 or 12 as a substrate in printing technology, particularly as a substrate that is in contact with printing ink, particularly as a coating, e.g. on gravure cylinders.
